# FASCICULE DE BREVET EUROPEEN

(11) **EP 4 205 607 B1**
(45) Date de publication et mention de la délivrance du brevet: **28.01.2026**
(21) Numéro de dépôt: 22215350.4
(22) Date de dépôt: 21.12.2022
(51) Int. Cl.: A47J 31/36, A47J 31/44, A47J 31/42, A47J 31/52

(54) **MACHINE A CAFE AUTOMATIQUE MUNIE D'UN BAC DE RECUPERATION DE GALETTES DE MOUTURE AMELIORE**
AUTOMATISCHE KAFFEEMASCHINE AUSGESTATTET MIT EINER VERBESSERTEN MAHLKUCHEN-ABLAGESCHALE
AUTOMATIC COFFEE MACHINE EQUIPPED WITH AN IMPROVED GRINDING CAKE RECOVERY TRAY

(30) Priorité: 03.01.2022 FR 2200016
(43) Date de publication de la demande: 05.07.2023
(73) Titulaire: SEB S.A., 69130 Ecully (FR)
(72) Inventeur: DUTERTRE, Thierry, 69134 Ecully Cedex (FR)
(74) Mandataire: SEB Développement

(56) Documents cités:
- EP-A1- 1 827 182
- WO-A1-2019/158542
- DE-B3- 102017 209 054
- FR-A1- 3 091 813

## Description

### Domaine technique

La présente invention se rapporte au domaine technique général des machines à café automatiques comportant une chambre d'infusion alimentée en mouture de café pour préparer une boisson, plus particulièrement une machine à café automatique comportant un bac de récupération des galettes de mouture appelé également bac à cakes.

### Etat de la technique

Il est connu du document EP3878322 une machine à café automatique comportant un dispositif d'infusion, un dispositif d'expulsion d'une galette de mouture, un bac de récupération des galettes de mouture et un bâti comprenant un logement de réception du bac. Le bac est mobile en translation horizontale entre une position insérée dans laquelle le bac est agencé dans le logement et une position extraite dans laquelle le bac est sorti du logement. Le bac comporte une ouverture supérieure muni d'un bord au-dessus duquel le dispositif d'expulsion pousse la galette de mouture pour la transférer du dispositif d'infusion dans le bac, lorsque le bac est en position insérée.

Une telle machine comporte un dispositif d'alerte du remplissage du bac qui comporte un système de comptage des galettes de mouture évacuées. Un signal d'alerte est émis quand le système de comptage atteint une quantité prédéterminée de galettes de mouture. La quantité prédéterminée est stockée dans une mémoire du système de comptage.

Cependant, les galettes de mouture qui tombent dans le bac peuvent s'empiler les unes sur les autres sans se répartir dans le bac pour arriver au niveau du bord alors que le système de comptage du dispositif d'alerte n'a pas encore atteint la quantité prédéterminée de galettes de mouture à évacuer. Une galette de mouture peut encore être évacuée et s'écraser sur la galette présente au niveau du bord. Des débris de mouture peuvent donc rester à côté du dispositif d'infusion ou tomber à côté du bac.

Pour pallier ce problème, la quantité programmée de galettes de mouture stockée dans la mémoire du système de comptage du dispositif d'alerte est beaucoup plus faible que la quantité théorique de galettes de mouture que pourrait effectivement contenir le bac si les galettes de mouture étaient bien réparties dans tout le bac. En conséquence, le dispositif d'alerte demande beaucoup plus fréquemment à l'utilisateur de vider le bac.

Le document FR3091813A1 décrit une machine de préparation de boissons à partir d'un ingrédient contenu dans une capsule, qui comprend un bac de collecte des capsules usagées avec un volet mobile en rotation entre une position de collecte dans laquelle le volet réduit l'espace de stockage du bac lorsque ce dernier est inséré dans le bâti de la machine et une position d'évacuation dans laquelle le volet augmente l'espace de stockage du bac lorsque ce dernier est retiré du bâti. Le document WO-2019/158542A1 divulgue un réceptacle de capsules usagées pour machines à boisson, tandis que le document DE102017209054B3 concerne une machine à café automatique avec un scanner laser pour déterminer une quantité accumulée de marc. Le document EP 1 827 182 A1 divulgue une machine à café automatique comprenant un dispositif d'expulsion d'une galette de mouture.

### Résumé de l'invention

La présente invention vise à remédier à ces inconvénients.

Le problème technique à la base de l'invention consiste à proposer une machine à café automatique qui présente un fonctionnement sûr et ergonomique.

Un autre but de l'invention est de proposer une machine à café automatique qui présente une conception simple et économique à mettre en œuvre.

A cet effet, l'invention a pour objet une machine à café automatique telle que définie dans la revendication 1.

Ainsi, les galettes de mouture qui sont dirigées par le volet à distance des parois du bac, au centre du bac, ne peuvent plus s'empiler en prenant appui sur une des parois, notamment celle la plus proche du bord. En conséquence, les galettes de mouture se répartissent dans le volume du bac sans dépasser au-dessus du bord et la fréquence de vidage du bac par l'utilisateur est réduite. Avantageusement, le volet est mobile en rotation autour d'un axe θ agencé à proximité du bord.

Ainsi, la galette de mouture vient prendre appui sur le volet dès qu'elle bascule dans le bac, pour être guidée vers le centre du bac. De plus, lors du vidage du bac, le volet peut pivoter en position d'évacuation complétement à l'extérieur du bac et libérer l'ouverture supérieure.

De manière avantageuse, l'axe θ est agencé à proximité du bord, à l'intérieur du bac.

Ainsi le volet en position de collecte ne dépasse pas au-dessus de l'ouverture supérieure.

De préférence, la galette de mouture présente un diamètre D, le volet s'étendant le long du bord sur une distance DV supérieure au diamètre D.

Ainsi, la galette de mouture est entièrement soutenue par le volet lors de son transfert vers le centre du bac.

Avantageusement, l'ouverture supérieure présente une longueur L et une largeur I, le bac comportant une paroi arrière de largeur I et le bord appartenant à la paroi arrière.

Une telle orientation du bac permet une bonne répartition des galettes de mouture, au fur et à mesure du remplissage du bac.

De préférence, le volet forme avec la paroi arrière un angle compris entre 30° et 45°, dans un plan de coupe vertical parallèle à la direction Δ.

Ainsi, la galette de mouture glisse sur le volet, sans risque de blocage intempestif dû aux frottements de la galette de mouture sur le volet.

Avantageusement, le volet comporte un organe de butée qui coopère avec la paroi arrière du bac lorsque le volet est en position de collecte.

De préférence, l'organe de butée est formé par au moins une nervure qui s'étend perpendiculairement au volet, l'au moins une nervure comportant une extrémité libre qui vient en appui sur la paroi arrière lorsque le volet est en position de collecte.

Une telle disposition permet d'obtenir une construction simple et économique pour réaliser un maintien du volet en position de collecte.

Avantageusement, l'ouverture est agencée dans un plan horizontal et le volet comporte une extrémité libre, le volet s'étendant le long de la direction Δ, depuis l'axe θ jusqu'à l'extrémité libre dans un plan de coupe vertical, parallèle à la direction Δ sur une longueur LV supérieure à 25% de la longueur L.

Ainsi, les galettes de mouture tombent dans le bac suffisamment loin de la paroi arrière pour éviter un empilage.

De préférence, le bac comporte une zone de préhension agencée à l'avant dudit bac.

Avantageusement, la machine à café automatique comporte un dispositif d'alerte du remplissage du bac qui comprend un système de comptage des galettes de mouture évacuées, un signal d'alerte étant émis quand le système de comptage atteint une quantité prédéterminée de galettes de mouture.

Ainsi, le bac muni d'un tel volet de répartition permet d'optimiser la quantité prédéterminée de galettes de mouture que le bac peut contenir sans dépasser au-dessus du bord. Le système de comptage peut, en conséquence, émettre un signal pour vider le bac à une fréquence réduite.

De manière avantageuse, la quantité prédéterminée est stockée dans une mémoire du système de comptage.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une machine à café automatique comportant un bac de récupération de galettes de mouture selon un mode particulier de réalisation de l'invention.
La figure 2 est une vue en coupe partielle suivant le plan de coupe vertical suivant la ligne II-II de la machine à café automatique de la figure 1.
La figure 3 est une vue en perspective du bac de récupération de galettes de mouture de la machine à café automatique de la figure 1, le volet étant en position de collecte.
La figure 4 est une vue en perspective du bac de récupération de galettes de mouture de machine à café automatique de la figure 1, le volet étant en position d'évacuation.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire la machine à café automatique font référence à cette machine reposant sur un plan de travail, en situation d'usage.

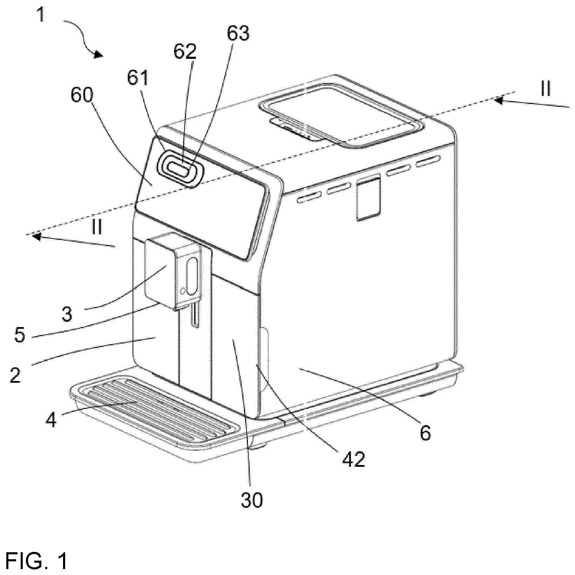

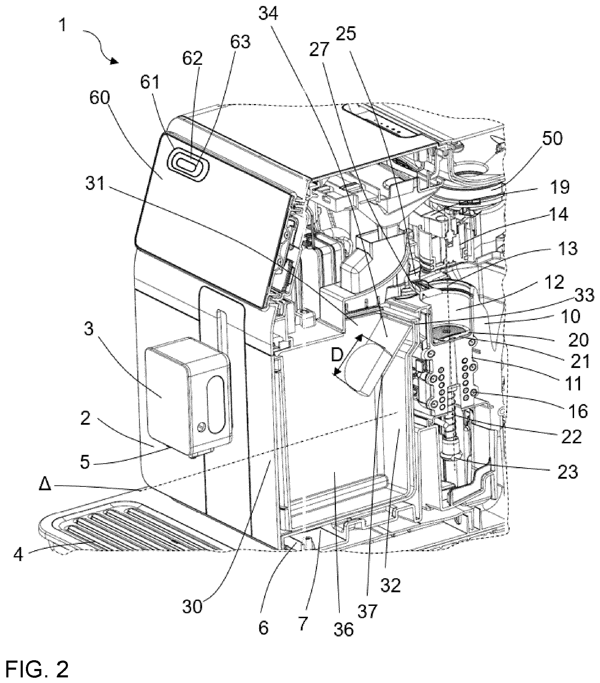

Dans l'exemple de réalisation représenté aux figures 1 à 2, une machine à café automatique 1 comporte, un groupe d'infusion 10 (Fig.2) muni d'une chambre d'infusion 12 alimentée en mouture de café, notamment par un broyeur à grains 50 et un bac 30 de récupération des galettes de mouture issues du groupe d'infusion 10. La machine à café automatique 1 comporte également un réservoir 2 formant une alimentation en eau froide et une tête de distribution 3 du café.

Conformément à la figure 2, le groupe d'infusion 10 comprend un corps 11 s'étendant longitudinalement selon un axe vertical et renfermant la chambre d'infusion 12 qui est munie d'une ouverture supérieure 13. La chambre d'infusion 12 est susceptible de recevoir un piston presseur 14 monté déplaçable selon un axe vertical au moyen d'un mécanisme d'entraînement (non représenté sur les figures). Le groupe d'infusion 10 comporte également une pompe électrique (non illustrée sur les figures), destinée à créer une circulation d'eau et d'infusion, ainsi qu'une chaudière 16 destinée à chauffer l'eau pour la préparation du café dans la chambre d'infusion 12. Le corps 11 est agencé latéralement à un vérin hydraulique (non visible sur les figures) à simple effet comportant une tige supérieure portant un bras 19 formant potence et dont l'extrémité libre est reliée au piston presseur 14. Les courses du piston presseur 14 et du vérin hydraulique sont ainsi effectuées selon des directions parallèles. Le piston presseur 14 parcourt une course entre une position haute de retrait pour laquelle il est situé au-dessus de la chambre d'infusion 12 et une position basse de tassage pour laquelle il pénètre dans la chambre d'infusion 12 par l'ouverture supérieure 13. Dans la position basse de tassage, le piston presseur 14 comprime la mouture de café admise dans la chambre d'infusion 12 pour former une galette de mouture comprimée.

La chaudière 16 et le corps 11 sont formés en une seule pièce de matériau conducteur de la chaleur qui contient une résistance électrique chauffante, des canaux de passage et de chauffage de l'eau dont des entrées sont reliées, via la pompe électrique au réservoir 2 d'eau froide et dont des extrémités débouchent sur le fond de la chambre d'infusion 12. Le piston presseur 14 présente un conduit de passage (non représenté sur les figures) de l'infusion, tandis que la pompe électrique est adaptée à créer une circulation d'eau ascendante dans la chambre d'infusion 12 vers le conduit de passage lorsque le piston presseur 14 ferme la chambre d'infusion 12.

Le conduit de passage de l'infusion du piston presseur 14 est relié à un conduit agencé dans la tête de distribution 3 par un tuyau souple (non représenté sur les figures) pour former une sortie de café 5. La tête de distribution 3 est agencée au-dessus d'un repose-tasse 4 et elle est montée mobile en translation verticale pour permettre à un utilisateur d'ajuster la position de la sortie de café 5 à la hauteur de la tasse.

Le groupe d'infusion 10 comporte un dispositif d'expulsion 20 de la galette de mouture comprimée et compacte, en fin de cycle de préparation d'une boisson infusée. Le dispositif d'expulsion 20 comporte un plateau 21 mobile à l'intérieur de la chambre d'infusion 12 entre une position basse de travail dans laquelle il forme le fond de la chambre d'infusion 12 et une position haute d'expulsion dans laquelle il est agencé au niveau de l'ouverture supérieure 13 de la chambre d'infusion 12. Le dispositif d'expulsion 20 comporte une tige d'éjection 22 qui est relié au plateau 21 mobile et qui traverse la chaudière 16. Le dispositif d'expulsion 20 comporte une pièce de transmission (non illustrée sur les figures) mise en mouvement par le vérin hydraulique qui agit sur une extrémité basse 23 de la tige d'éjection 22. Ainsi, le mouvement du plateau 21 est assujetti au mouvement du vérin hydraulique. Le dispositif d'expulsion 20 de la galette de mouture du groupe d'infusion 10 comporte un bras éjecteur 25 qui est animé d'un mouvement rotatif alternatif au-dessus de l'ouverture supérieure 13 pour évacuer la galette de mouture lorsque le plateau 21 est dans la position haute d'expulsion. Le bras éjecteur 25 est mobile en rotation autour d'un axe vertical. Le dispositif d'expulsion 20 comporte une came (non représentée sur les figures) solidaire du piston presseur 14. Le bras éjecteur 25 comporte une portion incurvée 27 destinée à entrer en contact avec la galette de mouture pour l'évacuer vers le bac 30.

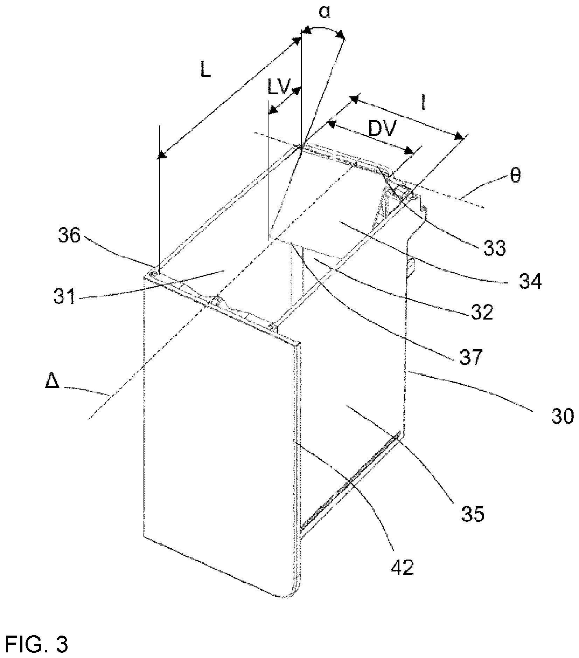

Tel que visible à la figure 2, la machine à café automatique 1 comporte un bâti 6 comprenant un logement 7 de réception du bac 30. Le bac 30 est mobile en translation horizontale selon une direction Δ entre une position insérée dans laquelle le bac 30 est agencé dans le logement 7 et une position extraite dans laquelle le bac 30 est sorti du logement 7. Le bac 30 comporte une ouverture supérieure 31. Dans la position insérée, l'ouverture supérieure 31 est agencée dans un plan horizontal situé sous un plan horizontal passant par l'ouverture supérieure 13 de la chambre d'infusion 12. L'ouverture supérieure 31 du bac 30 présente une longueur L et une largeur I (Fig. 3). Le bac 30 comporte une paroi arrière 32 de largeur I agencée à proximité immédiate du dispositif d'infusion 10, notamment la paroi arrière 32 comporte un bord 33 qui est agencé à proximité de l'ouverture supérieure 13 de la chambre d'infusion 12. Le bras éjecteur 25 pousse la galette de mouture dans le plan horizontal passant par l'ouverture supérieure 13 de la chambre d'infusion 12 pour la transférer du dispositif d'infusion 10 dans le bac 30 en passant au-dessus du bord 33 qui est situé dans le plan horizontal passant par l'ouverture supérieure 31 du bac 30.

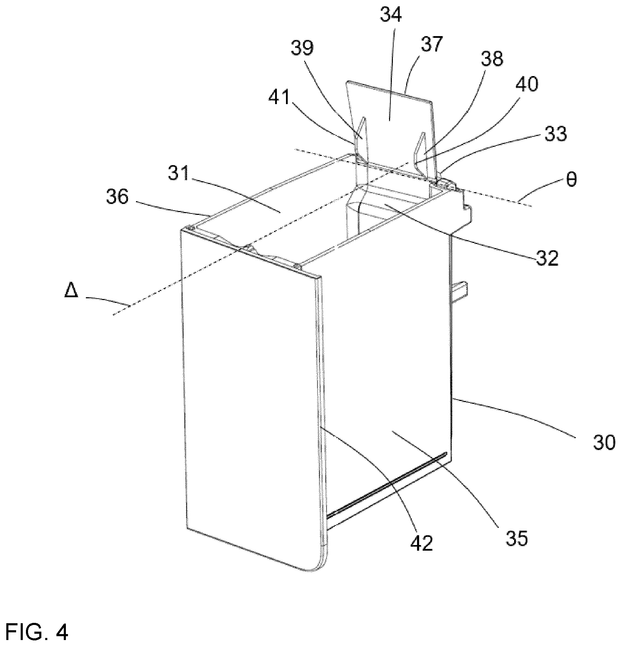

Conformément aux figures 2 à 4, le bac 30 comporte un volet 34 mobile en rotation entre une position de collecte (Fig. 2 et 3) dans laquelle le volet 34 est agencé dans le bac 30 et dévie les galettes de mouture vers le centre du bac 30 lorsque le bac 30 est dans la position insérée dans le logement 7 et une position d'évacuation (Fig. 4) dans laquelle le volet 34 est agencé à l'extérieur du bac 30 lorsque le bac 30 est dans la position retirée du logement 7 pour vider les galettes de mouture du bac 30. Le volet 30 est monté mobile en rotation autour d'un axe θ agencé à proximité du bord 33, à l'intérieur du bac 30. Le volet 34 comporte deux tourillons qui coopèrent avec deux cavités (non représentés sur les figures) agencées dans deux parois latérales 35, 36 du bac 30. Dans la position de collecte, le bras éjecteur 25 du dispositif d'expulsion 20 pousse une galette de mouture qui présente un diamètre D égale à 50 mm sur le volet 34 qui s'étend le long du bord 33 sur une distance DV égale à 55 mm. Le volet 34 comporte une extrémité libre 37 qui s'étend de manière parallèle à l'axe θ. Le volet 34 s'étend le long de la direction Δ, depuis l'axe θ jusqu'à l'extrémité libre 37 dans un plan de coupe vertical, parallèle à la direction Δ sur une longueur LV égale à 35 mm. La longueur L de l'ouverture supérieure 31 est égale à 130 mm.

Le volet 34 forme avec la paroi arrière 32 verticale un angle égal à 40° dans un plan de coupe vertical parallèle à la direction Δ (Fig. 3). Le volet 34 comporte un organe de butée 38, 39 (Fig. 4) qui coopère avec la paroi arrière 32 du bac 30 lorsque le volet 34 est en position de collecte. L'organe de butée est formé par deux nervures 38, 39 qui s'étendent perpendiculairement au volet 34 et à l'axe de rotation θ. Chaque nervure 38, 39 comporte une extrémité libre 40, 41 qui vient en appui sur la paroi arrière 32 lorsque le volet 34 est en position de collecte. Tel que visible à la figure 4, le bac 30 est dans la position retirée du logement 7 du bâti 6 et le volet 34 est dans la position d'évacuation. Le volet 34 est pivoté autour de l'axe θ à l'extérieur du bac 30 pour dégager l'ouverture supérieure 31 et ainsi, en retournant le bac 30, vider les galettes de mouture.

Tel qu'illustré de manière schématique aux figures 1 et 2, la machine à café automatique 1 comporte un système de commande 60 qui comprend un dispositif d'alerte 61 du remplissage du bac 30. Le dispositif d'alerte 61 comprend un système de comptage 62 des galettes de mouture évacuées. Le système de comptage 62 émet un signal d'alerte 63 quand le système de comptage 62 atteint une quantité prédéterminée de 15 galettes de mouture. Le signal d'alerte 63 peut notamment être un signal lumineux ou un signal sonore. La quantité prédéterminée est stockée dans une mémoire du système de comptage 62. Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention tel que défini dans les revendications.

Ainsi, dans une variante de réalisation non illustrée, l'ouverture supérieure 31 du bac 30 présente une longueur L et une largeur I, le bac 30 comportant une paroi arrière 32 de longueur L et le bord appartient à la paroi arrière 32.

## Revendications

1. Machine à café automatique (1) comportant un dispositif d'infusion (10), un dispositif d'expulsion (20) d'une galette de mouture, un bac (30) de récupération de plusieurs galettes de mouture et un bâti (6) comprenant un logement (7) de réception dudit bac (30), ledit bac (30) étant mobile en translation horizontale selon une direction Δ entre une position insérée dans laquelle le bac (30) est agencé dans le logement (7) et une position extraite dans laquelle le bac (30) est sorti du logement (7), ledit bac (30) comportant une ouverture supérieure (31) munie d'un bord (33) au-dessus duquel le dispositif d'expulsion (20) pousse ladite galette de mouture pour la transférer du dispositif d'infusion (10) dans le bac (30) lorsque le bac (30) est en position insérée, **caractérisé en ce que** ledit bac (30) comporte un volet (34) mobile en rotation entre une position de collecte dans laquelle le volet (34) est agencé dans le bac (30) et dévie les galettes de mouture vers le centre du bac (30) lorsque le bac (30) est dans la position insérée dans le logement (7), et une position d'évacuation dans laquelle le volet (34) est agencé à l'extérieur du bac (30) lorsque le bac (30) est dans la position retirée du logement (7) pour vider les galettes de mouture du bac (30).

2. Machine à café automatique (1) selon la revendication 1, **caractérisée en ce que** le volet (34) est mobile en rotation autour d'un axe θ agencé à proximité du bord (33).

3. Machine à café automatique (1) selon l'une quelconque des revendications 1 à 2, **caractérisée en ce que** la galette de mouture présente un diamètre D, le volet (34) s'étendant le long du bord (33) sur une distance DV supérieure au diamètre D.

4. Machine à café automatique (1) selon l'une quelconque des revendications 1 à 3, **caractérisée en ce que** l'ouverture supérieure (31) présente une longueur L et une largeur I, le bac (30) comportant une paroi arrière (32) de largeur I et le bord (33) appartenant à la paroi arrière (32).

5. Machine à café automatique (1) selon la revendication 4, **caractérisée en ce que** le volet (34) forme avec la paroi arrière (32) un angle compris entre 30° et 45° dans un plan de coupe vertical parallèle à la direction Δ.

6. Machine à café automatique (1) selon l'une quelconque des revendications 4 à 5, **caractérisée en ce que** le volet (34) comporte un organe de butée (38, 39) qui coopère avec la paroi arrière (32) du bac lorsque le volet (34) est en position de collecte.

7. Machine à café automatique (1) selon la revendication 6, **caractérisée en ce que** l'organe de butée est formé par au moins une nervure (38, 39) qui s'étend perpendiculairement au volet (34), l'au moins une nervure (38, 39) comportant une extrémité libre (40, 41) qui vient en appui sur la paroi arrière (32) lorsque le volet (34) est en position de collecte.

8. Machine à café automatique (1) selon l'une quelconque des revendications 4 à 7, **caractérisée en ce que** l'ouverture supérieure (31) est agencée dans un plan horizontal et **en ce que** le volet (34) comporte une extrémité libre (37), le volet (34) s'étendant le long de la direction Δ, depuis l'axe θ jusqu'à l'extrémité libre (37) dans un plan de coupe vertical, parallèle à la direction Δ sur une longueur LV supérieure à 25% de la longueur L.

9. Machine à café automatique (1) selon l'une quelconque des revendications 1 à 8, **caractérisée en ce que** le bac (30) comporte une zone de préhension (42) agencée à l'avant dudit bac (30).

10. Machine à café automatique (1) selon l'une quelconque des revendications 1 à 9, **caractérisée en ce qu'**elle comporte un dispositif d'alerte (61) du remplissage du bac (30) qui comprend un système de comptage (62) des galettes de mouture évacuées, un signal d'alerte (63) étant émis quand le système de comptage (62) atteint une quantité prédéterminée de galettes de mouture.

## Patentansprüche

1. Automatische Kaffeemaschine (1) mit einer Brühvorrichtung (10), einer Auswurfvorrichtung (20) für Kaffeemehlpastillen, einem Behälter (30) zum Sammeln mehrerer Kaffeemehlpastillen und einem Gehäuse (6), das eine Abnahmevorrichtung (7) für den genannten Behälter (30) umfasst, wobei der genannte Behälter (30) in einer horizontalen Translation entlang einer Richtung Δ zwischen einer eingesetzten Position, in der der Behälter (30) in der Abnahmevorrichtung (7) angeordnet ist, und einer herausgenommenen Position, in der der Behälter (30) außerhalb der Abnahmevorrichtung (7) angeordnet ist, beweglich ist, wobei der genannte Behälter (30) eine obere Öffnung (31) aufweist, die mit einem Rand (33) versehen ist, über dem die Auswurfvorrichtung (20) die genannte Kaffeemehlpastille drückt, um sie von der Brühvorrichtung (10) in den Behälter (30) zu überführen, wenn der Behälter (30) in eingesetzter Position ist, **dadurch gekennzeichnet, dass** der genannte Behälter (30) eine Klappe (34) umfasst, die zwischen einer Sammelposition, in der die Klappe (34) innerhalb des Behälters (30) angeordnet ist und die Kaffeemehlpastillen zum Mittelpunkt des Behälters (30) umlenkt, wenn der Behälter (30) in der eingesetzten Position innerhalb der Abnahmevorrichtung (7) ist, und einer Entleerungsposition, in der die Klappe (34) außerhalb des Behälters (30) angeordnet ist, wenn der Behälter (30) in der herausgenommenen Position aus der Abnahmevorrichtung (7) ist, um die Kaffeemehlpastillen aus dem Behälter (30) zu leeren, beweglich ist.

2. Automatische Kaffeemaschine (1) nach Anspruch 1, **dadurch gekennzeichnet, dass** die Klappe (34) um eine Achse θ drehbar ist, die sich in der Nähe des Randes (33) befindet.

3. Automatische Kaffeemaschine (1) nach einem der Ansprüche 1 bis 2, **dadurch gekennzeichnet, dass** die Kaffeemehlpastille einen Durchmesser D aufweist, wobei die Klappe (34) sich entlang des Randes (33) über eine Strecke DV erstreckt, die größer als der Durchmesser D ist.

4. Automatische Kaffeemaschine (1) nach einem der Ansprüche 1 bis 3, **dadurch gekennzeichnet, dass** die obere Öffnung (31) eine Länge L und eine Breite I aufweist, wobei der Behälter (30) eine Rückwand (32) mit der Breite I umfasst und der Rand (33) zur Rückwand (32) gehört.

5. Automatische Kaffeemaschine (1) nach Anspruch 4, **dadurch gekennzeichnet, dass** die Klappe (34) mit der Rückwand (32) einen Winkel zwischen 30° und 45° in einer vertikalen Schnittfläche parallel zur Richtung Δ bildet.

6. Automatische Kaffeemaschine (1) nach einem der Ansprüche 4 bis 5, **dadurch gekennzeichnet, dass** die Klappe (34) ein Anschlagelement (38, 39) umfasst, das mit der Rückwand (32) des Behälters zusammenarbeitet, wenn die Klappe (34) in der Sammelposition ist.

7. Automatische Kaffeemaschine (1) nach Anspruch 6, **dadurch gekennzeichnet, dass** das Anschlagelement durch mindestens eine Rippe (38, 39) gebildet wird, die senkrecht zur Klappe (34) verläuft, wobei die mindestens eine Rippe (38, 39) ein freies Ende (40, 41) aufweist, das zur Rückwand (32) Unterstützung bietet, wenn die Klappe (34) in der Sammelposition ist.

8. Automatische Kaffeemaschine (1) nach einem der Ansprüche 4 bis 7, **dadurch gekennzeichnet, dass** die obere Öffnung (31) in einer horizontalen Ebene angeordnet ist und dass die Klappe (34) ein freies Ende (37) umfasst, wobei sich die Klappe (34) entlang der Richtung Δ vom Achsepunkt θ bis zum freien Ende (37) in einer vertikalen Schnittfläche parallel zur Richtung Δ über eine Länge LV erstreckt, die mehr als 25% der Länge L beträgt.

9. Automatische Kaffeemaschine (1) nach einem der Ansprüche 1 bis 8, **dadurch gekennzeichnet, dass** der Behälter (30) eine Greiffläche (42) aufweist, die an der Vorderseite des genannten Behälters (30) angeordnet ist.

10. Automatische Kaffeemaschine (1) nach einem der Ansprüche 1 bis 9, **dadurch gekennzeichnet, dass** sie ein Füllstand-Warnvorrichtung (61) für den Behälter umfasst, das ein Zählsystem (62) für die evakuierten Kaffeemehlpastillen umfasst, wobei ein Warnsignal (63) ausgegeben wird, wenn das Zählsystem (62) eine vorbestimmte Anzahl von Kaffeemehlpastillen erreicht.

## Claims

1. Automatic coffee machine (1) comprising a brewing device (10), a grounds ejection device (20), a container (30) for collecting multiple grounds cakes, and a frame (6) including a housing (7) for receiving said container (30), said container (30) being movable in horizontal translation along a direction Δ between an inserted position wherein the container (30) is arranged in the housing (7) and an extracted position wherein the container (30) is outside the housing (7), said container (30) having a top opening (31) provided with an edge (33) above which the ejection device (20) pushes said grounds cake to transfer it from the brewing device (10) into the container (30) when the container (30) is in the inserted position, **characterized in that** said container (30) includes a flap (34) movable in rotation between a collecting position wherein the flap (34) is arranged within the container (30) and deflects the grounds cakes toward the center of the container (30) when the container (30) is in the inserted position within the housing (7), and an evacuating position wherein the flap (34) is arranged outside the container (30) when the container (30) is in the extracted position from the housing (7) to empty the grounds cakes from the container (30).

2. Automatic coffee machine (1) according to claim 1, **characterized in that** the flap (34) is rotatable about an axis θ located near the edge (33).

3. Automatic coffee machine (1) according to any one of claims 1 to 2, **characterized in that** the grounds cake has a diameter D, the flap (34) extending along the edge (33) over a distance DV greater than the diameter D.

4. Automatic coffee machine (1) according to any one of claims 1 to 3, **characterized in that** the top opening (31) has a length L and a width I, the container (30) comprising a rear wall (32) of width I and the edge (33) belonging to the rear wall (32).

5. Automatic coffee machine (1) according to claim 4, **characterized in that** the flap (34) forms an angle between 30° and 45° with the rear wall (32) in a vertical sectional plane parallel to direction Δ.

6. Automatic coffee machine (1) according to any one of claims 4 to 5, **characterized in that** the flap (34) includes a stop member (38, 39) that cooperates with the rear wall (32) of the container when the flap (34) is in the collecting position.

7. Automatic coffee machine (1) according to claim 6, **characterized in that** the stop member is formed by at least one rib (38, 39) that extends perpendicular to the flap (34), the at least one rib (38, 39) having a free end (40, 41) that comes into contact with the rear wall (32) when the flap (34) is in the collecting position.

8. Automatic coffee machine (1) according to any one of claims 4 to 7, **characterized in that** the top opening (31) is arranged in a horizontal plane and **in that** the flap (34) has a free end (37), the flap (34) extending along direction Δ, from the axis θ to the free end (37) in a vertical sectional plane parallel to direction Δ over a length LV greater than 25% of the length L.

9. Automatic coffee machine (1) according to any one of claims 1 to 8, **characterized in that** the container (30) includes a gripping area (42) arranged at the front of said container (30).

10. Automatic coffee machine (1) according to any one of claims 1 to 9, **characterized in that** it comprises a bin filling alert device (61) including a counting system (62) for evacuated grounds cakes, an alert signal (63) being emitted when the counting system (62) reaches a predetermined quantity of grounds cakes.
